# EUROPÄISCHE PATENTSCHRIFT

(11) **EP 2 603 451 B1**
(45) Veröffentlichungstag und Bekanntmachung des Hinweises auf die Patenterteilung: **29.04.2020**
(21) Anmeldenummer: 11717467.2
(22) Anmeldetag: 24.03.2011
(51) Int. Cl.: C01B 3/36, F23D 11/00

(54) **BRENNER UND VERFAHREN FÜR DIE PARTIELLE OXIDATION VON FLÜSSIGEM, KOHLENSTOFFHALTIGEM BRENNSTOFF**
BURNER AND METHOD FOR PARTIALLY OXIDIZING LIQUID, CARBON-CONTAINING FUEL
BRÛLEUR ET PROCÉDÉ POUR L'OXYDATION PARTIELLE DE COMBUSTIBLE LIQUIDE, CONTENANT DU CARBONE

(30) Priorität: 10.08.2010 DE 102010033935
(43) Veröffentlichungstag der Anmeldung: 19.06.2013
(73) Patentinhaber: Air Liquide Global E&C Solutions Germany GmbH, 60439 Frankfurt am Main (DE)
(72) Erfinder: BEYER, Christoph, 60598 Frankfurt am Main (DE); BREHM, Lothar, 61138 Niederdorfelden (DE); SCHLICHTING, Holger, 65719 Hofheim (DE); HEINZ, Guenter, 65618 Selters-Eisenbach (DE); ULBER, Dieter, 61449 Steinbach (DE); BOHLE, Jürgen, 60596 Frankfurt am Main (DE)
(86) Internationale Anmeldenummer: PCT/DE2011/000320
(87) Internationale Veröffentlichungsnummer: WO 2012/019572

(56) Entgegenhaltungen:
- CN-A- 1 300 870
- DE-A1-102008 006 572
- JP-A- 58 129 107
- US-A1- 2003 196 576
- A. I. IGOLKIN: "THERMAL DIFFUSION COATINGS FOR PROTECTION FROM GAS CORROSION, COKE DEPOSITION, AND CARBURIZATION", CHEMICAL AND PETROLEUM ENGINEERING, Bd. 39, Nr. 5/6, 1. Januar 2003 (2003-01-01), Seiten 366-371, XP55003776, ISSN: 0009-2355, DOI: 10.1023/A:1025608425641

## Beschreibung

### Gebiet der Erfindung

Die Erfindung betrifft einen Brenner für die partielle Oxidation von flüssigem, kohlenstoffhaltigem Brennstoff mit Wasserdampf und einem sauerstoffhaltigen Gas, sowie das Verfahren zur Herstellung von Synthesegas durch partielle Oxidation der genannten Brennstoffe, bei dem der erfindungsgemäße Brenner eingesetzt wird.

### Stand der Technik

Ein bekanntes Verfahren zur partiellen Oxidation von flüssigen, kohlenwasserstoffhaltigen Einsatzstoffen zur Herstellung von Synthesegas ist z. B. der Lurgi Prozess, wie er in Ullmann's Encyclopedia of Industrial Chemistry, 6th Edition, Volume 15, Chapt. 3.2.2. beschrieben ist.

Bei derartigen Verfahren wird der kohlenwasserstoffhaltige Einsatzstoffstrom, z. B. Schweröl, zusammen mit dem sauerstoffhaltigen Oxidationsmittel, z. B. mit Sauerstoff angereicherte Luft, und gegebenenfalls einem Moderator (meist Wasserdampf oder Kohlendioxid) in einem Reaktorraum (Brennkammer) bei Temperaturen von 1200 bis 1500 °C und hohen Drücken, zwischen 30 und 75 bar, in ein, hauptsächlich aus Kohlenmonoxid und Wasserstoff bestehendes, Synthesegas umgewandelt.

Der Reaktor ist dabei mit einem oder mehreren Brennern ausgestattet, die in der Regel am Kopf des Reaktors so installiert sind, dass ihre Flamme senkrecht von oben nach unten in den Reaktor hinein geführt wird, sodass nur das untere Ende der Brennermündung in die Brennkammer hineinragt und den hohen Temperaturen und der korrosiven Atmosphäre der Brennkammer ausgesetzt ist. Ein derartiger Brenner ist beschrieben in DE 198 60 479 C1 und in DE 199 31 373 A1.

Die bei diesen Synthesegaserzeugungsverfahren entstehenden hohen Temperaturen und korrosiven Gase begrenzen die Haltbarkeit der Brenner_{[drdro1].} Zumindest die stark belasteten Bauteile der Brenner werden daher aus sogenannten Superlegierungen gefertigt. Es handelt sich dabei um hochwarmfeste Legierungen, wie z. B. hoch kohlenstoffhaltige Nickel-Chrom-Eisen-Legierungen. Grundsätzliche Ausführungen über Superlegierungen sind in Römpps Chemie-Lexikon, 8. Auflage, Franckh'sche Verlagshandlung, Stuttgart zu finden.

Neben der Auswahl besonders belastbarer Konstruktionswerkstoffe, wurden zahlreiche konstruktive Methoden zur Verlängerung der Brennerstandzeiten entwickelt.

In EP 0 545 281 B1 wird vorgeschlagen, die Stirnseite der Brennermündung mit einer aus einzelnen, nebeneinander angeordneten Keramikplättchen zusammengesetzten Schicht zu verkleiden.

In EP 1 284 234 A2 wird vorgeschlagen, das innere Brennerrohr in zwei, lösbar miteinander verbundene Hälften zu teilen, wobei nur die untere, zur Brennerstirnseite gewandte Hälfte aus einer besonders hochtemperaturfesten und hochschmelzenden Metalllegierung besteht. Das äußere Brennerrohr ist an der Stirnseite mit einem Raum zur Durchleitung eines Kühlmediums ausgestattet und zusätzlich ist die in den Reaktor hineinragende Brennermündung mit Kühlschlangen umgeben.

In DE 601 20 674 T2 wird die Installation eines ringförmigen, aus einem Material mit einem hohen Schmelzpunkt hergestellten Hitzeschilds auf der Stirnseite der Brennermündung vorgeschlagen.

Die Anmeldeschrift US 2003/196576 A1 zeigt einen Brenner dessen Mündung durch ein Hitzeschild, heat shield genannt, geschützt ist. Dieses Hitzeschild stellt ein separates Bauteil dar, das auf der Mündung montiert wird. Das Hitzeschild selbst wird mit einer Beschichtung aus MCrAlY geschützt.

Die Offenlegungsschrift DE 10 2008 006 572 A1 beansprucht einen Brenner mit einer direkt auf die Brennermündung aufgetragenen Schutzschicht, bestehend aus einer Zirkon-Yttriumoxid-Mischung.

Nachteilig an den meisten der bisher vorgeschlagenen Lösungen zur Verlängerung der Brennerstandzeit ist, dass sie in die Konstruktion der Brennermündung eingreifen, sodass bei der Konstruktion ein Kompromiss zwischen der eigentlichen Funktion des Brenners und den Maßnahmen zu seinem Schutz vor Korrosion gefunden werden muss.

### Beschreibung der Erfindung

Es bestand daher die Aufgabe, eine alternative Lösung zur Verlängerung der Brennerstandzeiten zu finden, die möglichst nicht in die Konstruktion des Brenners eingreift und wirtschaftlich durchzuführen ist.

Die Lösung der erfindungsgemäßen Aufgabe ergibt sich im Wesentlichen aus den kennzeichnenden Merkmalen des Anspruchs 1 in Zusammenwirken mit den Merkmalen des Oberbegriffs. Weitere vorteilhafte Ausgestaltungen der Erfindung ergeben sich aus dem Unteranspruch. Die Erfindung betrifft auch ein Verfahren für die partielle Oxidation von flüssigem, kohlenstoffhaltigem Brennstoff mit Wasserdampf und einem sauerstoffhaltigen Gas, bei dem der erfindungsgemäße Brenner eingesetzt wird.

Die Aufgabe wurde dadurch gelöst, dass die zur Brennkammer gerichteten Teile der Austrittsmündung ganz oder teilweise mit einer Beschichtung oder mit einer Diffusionsschicht zum Schutz vor thermischer Belastung und/oder Korrosion versehen werden.

Angeregt wurde diese erfinderische Lösung der Aufgabe durch die beim Bau von Heißgasturbinen bewährte Praxis, die hohen Temperaturen und korrosiven Gasen ausgesetzten Teile mit einer keramischen Schutzschicht zu versehen, wie es z.B. in DE 35 43 802 A1 berichtet wird.

### Bevorzugte Ausgestaltungen der Erfindung

Eine bevorzugte Ausgestaltung der Erfindung ist dadurch gekennzeichnet, dass es sich bei dem thermischen Spritzverfahren zum Aufbringen der Haftschicht und der WärmeSchutzschicht um Plasmaspritzen handelt.

Die Erfindung betrifft auch ein Verfahren für die partielle Oxidation von flüssigem, kohlenstoffhaltigem Brennstoff mit Wasserdampf und einem sauerstoffhaltigen Gas, das dadurch gekennzeichnet ist dass mindestens ein Brenner gemäß mindestens einem der Ansprüche 1 und 2 verwendet wird. Details der Verfahrensdurchführung und konstruktive Details des Brenners sind dem Fachmann bekannt und beispielsweise in den Druckschriften DE 19931373 A1, DE 19860479 C1, 10152686 A1 und DE 10156980 A1 vorbeschrieben, deren Offenbarungsgehalt hiermit durch Bezugnahme in die Offenbarung der vorliegenden Anmeldung aufgenommen wird.

### Alternative zur Erfindung

Eine nicht zur Erfindung gehörende Alternative zum Aufbringen der erfindungsgemäßen Haft- und Wärmeschutzschicht besteht darin, durch Alitieren, Chromieren oder Silizieren lediglich eine Diffusionsschicht in der Oberfläche des Werkstücks zu erzeugen. Die separate Haft- und die Wärmeschutzschicht entfällt dabei, was zur konstruktiven Einfachheit des erfindungsgemäßen Brenners beiträgt.

### Ausführungsbeispiel

Weiterbildungen, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen
- Fig. 1: die Anordnung des erfindungsgemäßen Brenners in der Brennkammer,
- Fig. 2: die Position und den schichtweisen Aufbau der Schutzschicht gemäß einer ersten bevorzugten Ausgestaltung der Erfindung,
- Fig. 3: nicht zur Erfindung gehörende Alternative

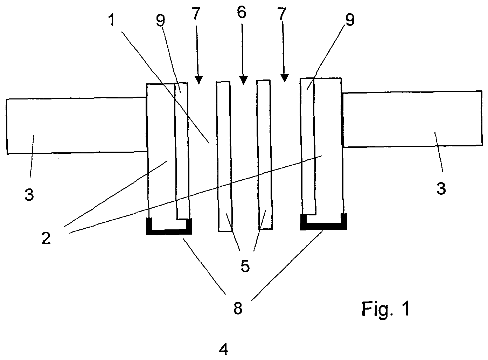

Fig. 1 zeigt, wie die Mündung (1) des Brenners mit dem unteren Ende des äußeren Brennerrohrs (2) durch die Reaktorwand (3) in die Brennkammer (4) des Reaktors hinein ragt. In diesem Beispiel ist die Mündung des Brenners (1) aus zwei konzentrischen Rohren aufgebaut. Das innere Rohr (5) fördert ein Gemisch (6) aus kohlenstoffhaltigem Brennmaterial und Wasserdampf, das äußere Rohr (2) fördert den für die Verbrennung bzw. die partielle Oxidation notwendigen, gegebenenfalls mit Wasserdampf oder Kohlendioxid vermischten, Sauerstoff (7). In Fig. 1 sind das innere (5) und das äußere (2) Rohrende der Brennermündung beispielhaft als gerade Rohrstücke dargestellt. Es sind aber auch andere Rohrformen möglich, wie z.B. konisch sich zum Rohrende hin verjüngende oder sich erweiternde Rohre. Es ist auch möglich, dass das äußere Rohr (2) mit einer Kühlkammer (9) versehen ist, in der sich ein Kühlmittel befindet- In diesem, in Fig. 1 gezeigten Beispiel, ist die in die Brennkammer (4) gerichtete Stirnseite des äußeren Rohres (2) mit einer Schutzschicht (8) versehen, bei der es sich erfindungsgemäß um eine Beschichtung oder um eine Diffusionsschicht handeln kann. Selbstverständlich kann auch die untere Stirnseite des inneren Rohres (5) mit einer derartigen Schutzschicht versehen werden, dies ist in Fig. 1 nicht dargestellt.

Wie in Fig. 1 angedeutet, kann die Schutzschicht (8) außer der Stirnfläche auch noch Flächen im inneren oder äußeren Bereich des oder der Rohre der Brennermündung bedecken.

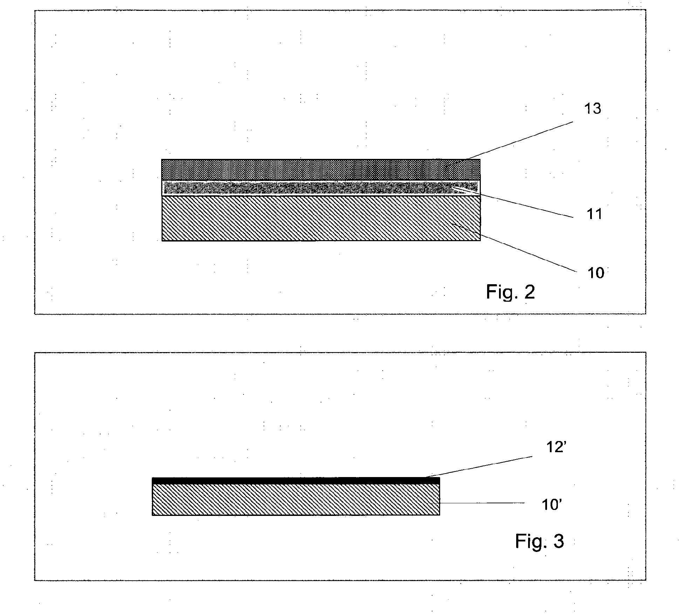

Fig. 2 stellt den schichtweisen Aufbau der Schutzschicht ((8) in Fig. 1) gemäß Anspruch 2 dar.

Bei der Ausgestaltung der Erfindung gemäß Anspruch 2 wird auf das Werkstück (10) eine Haft- (11) und einer Wärmeschutzschicht (13) durch jeweils ein thermisches Spritzverfahren, wie z.B. Plasmaspritzen, aufgetragen wird, wobei die Haftschicht (11) aus dem Metallgemisch MCrAlY (M steht für wenigstens eines der Elemente Ni, Co, Pt oder Pd) besteht und wobei die Wärmeschutzschicht (13) bevorzugt aus einem oxidischen Spritzmaterial, insbesondere aus ZrO₂, besteht.

Für die Lösung der Aufgabe in Frage kommende thermische Beschichtungsverfahren, wie z. B. Plasmaspritzen, sind in Ullmann's Encyclopedia of Industrial Chemistry, 6th Edition, Volume 21, Chapt. 5 beschrieben.

Dass die Haltbarkeit der Schutzschicht durch die Grundierung mittels einer Haftschicht dieser Art verbessert wird, ist dem Fachmann z. B aus US 4,321,310 bekannt. Bei der Entwicklung der vorliegenden Erfindung wurde MCrAlY-Spritzmaterial mit der Handelsbezeichnung SICOAT 2464 mit Erfolg eingesetzt.

Fig. 3 stellt eine nicht zur Erfindung gehörende Alternative zum Aufbau der Schutzschicht ((8) in Fig. 1) dar.

Diese Alternative besteht darin, dass auf eine Beschichtung des Werkstücks (10') verzichtet wird, und stattdessen die zu schützende Oberfläche lediglich einer Diffusionsbehandlung unterzogen wird, wobei Aluminium- und/oder Silizium- und/oder Chrom-Atome in die Oberfläche (12') eindiffundieren. Diese Verfahren sind als Alitieren, Silizieren und Chromieren dem Fachmann bekannt. Die Grundzüge der angewandten Diffusionsbehandlung sind in Römpps Chemie-Lexikon, 8. Auflage, Franckh'sche Verlagshandlung, Stuttgart, beschrieben.

### Gewerbliche Anwendbarkeit

Mit der Erfindung wird ein Brenner zur Verfügung gestellt, der sich durch eine hohe Widerstandsfähigkeit gegen thermische und korrosive Belastungen auszeichnet.

### Bezugszeichenliste

- (1): Brennermündung
- (2): äußeres Brennerrohr
- (3): Reaktorwand
- (4): Brennkammer inneres Brenner
- (6): Gemisch aus kohlenstoffhaltigem Brennmaterial und Wasserdampf
- (7): Sauerstoff
- (8): Schutzschicht
- (9): Kühlkammer
- (10), (10'): Werkstück
- (11): Haftschicht
- (12'): Diffusionsschicht
- (13): Wärmeschutzschicht

## Patentansprüche

1. Brenner für die partielle Oxidation von flüssigem, kohlenstoffhaltigem Brennstoff mit Wasserdampf und einem sauerstoffhaltigen Gas, dessen Austrittsmündung in eine Brennkammer gerichtet ist, **dadurch gekennzeichnet, dass** die zur Brennkammer (4) gerichteten Teile der Austrittsmündung (1) ganz oder teilweise mit einer Beschichtung (8), die aus einer Haft (11) - und einer Wärmeschutzschicht (13) besteht, zum Schutz vor thermischer Belastung und/oder Korrosion versehen sind, die jeweils durch ein thermisches Spritzverfahren aufgetragen werden, wobei die Haftschicht (11) aus dem Metallgemisch MCrAlY besteht, wobei M für wenigstens eines der Elemente Ni, Co, Pt oder Pd steht und wobei die Wärmeschutzschicht (13) bevorzugt aus einem oxidischen Spritzmaterial, insbesondere aus ZrO₂, besteht.

2. Brenner gemäß Anspruch 1, **dadurch gekennzeichnet, dass** es sich bei dem thermischen Spritzverfahren um Plasmaspritzen handelt.

3. Verfahren für die partielle Oxidation von flüssigem, kohlenstoffhaltigem Brennstoff mit Wasserdampf und einem sauerstoffhaltigen Gas, **dadurch gekennzeichnet, dass** mindestens ein Brenner gemäß mindestens einem der Ansprüche 1 und 2 verwendet wird.

## Claims

1. Burner for the partial oxidisation of liquid, carbon-containing fuel, said fuel having water vapour and an oxygen-containing gas, the outlet opening of which is directed into a combustion chamber, **characterised in that** the parts of the outlet opening (1) directed towards the combustion chamber (4) are completely or partially provided with a coating (8), which consists of an adhesive layer (11) and a heat protection layer (13), for protecting against thermal stress and/or corrosion, which in each case are applied by a thermal spraying process, wherein the adhesive layer (11) consists of the metal mixture MCrAlY, wherein M stands for at least one of the elements Ni, Co, Pt or Pd and wherein the heat protection layer (13) consists preferably of an oxidic spray material, in particular of ZrO₂.

2. Burner according to claim 1, **characterised in that** the thermal spraying process is plasma spraying.

3. Method for the partial oxidation of liquid, carbon-containing fuel having water vapour and an oxygen-containing gas, **characterised in that** at least one burner according to at least one of claims 1 and 2 is used.

## Revendications

1. Brûleur destiné à l'oxydation partielle de combustible liquide contenant du carbone avec de la vapeur d'eau et un gaz contenant de l'oxygène, dont l'orifice de sortie est orientée dans une chambre de combustion, **caractérisé en ce que** les pièces de l'orifice de sortie (1) orientées vers la chambre de combustion (4) sont pourvues totalement ou partiellement d'un revêtement (8), qui se compose d'une couche de protection thermique (13) et adhésive (11), pour la protection contre une sollicitation thermique et/ou la corrosion, qui ont été appliquées respectivement par un procédé de pulvérisation thermique, dans lequel la couche adhésive (11) se compose d'un mélange de métaux MCrAlY et dans lequel M représente au moins l'un des éléments Ni, Co, Pt ou Pd et dans lequel la couche de protection thermique (13) consiste de préférence en un matériau de pulvérisation obtenu par oxydation, en particulier du ZrO₂.

2. Brûleur selon la revendication 1, **caractérisé en ce qu'**il s'agit de pulvérisation par plasma lors du procédé de pulvérisation thermique.

3. Procédé d'oxydation partielle de combustible liquide contenant du carbone avec de la vapeur d'eau et un gaz contenant de l'oxygène, **caractérisé en ce qu'**au moins un brûleur est utilisé selon au moins l'une des revendications 1 et 2.
